# FASCICULE DE BREVET EUROPEEN

(11) **EP 1 696 018 B1**
(45) Date de publication et mention de la délivrance du brevet: **17.06.2009**
(21) Numéro de dépôt: 06290250.7
(22) Date de dépôt: 10.02.2006
(51) Int. Cl.: C10G 45/02, B01J 20/06, B01J 20/10, B01J 20/28

(54) **Procédé de désulfuration profonde par adsorption d'une coupe hydrocarboné de type gazole**
Verfahren zur Entschwefelung eines Destillates durch Adsorption
Deep desulfurization process of hydrocarbon middle distillates by adsorption

(30) Priorité: 25.02.2005 FR 0501968
(43) Date de publication de la demande: 30.08.2006
(73) Titulaire: Institut Français du Pétrole, 92852 Rueil Malmaison Cedex (FR)
(72) Inventeur: Nicolaos, Alexandre, 69003 Lyon (FR); Burkhardt,Thorsten, 69005 Lyon (FR)

(56) Documents cités:
- US-A- 5 935 420
- US-A1- 2003 111 389

## Description

### DOMAINE DE L'INVENTION :

La présente invention concerne un procédé de désulfuration profonde d'une coupe hydrocarbonée de type distillat, ou gazole selon la terminologie de l'homme du métier, faisant appel à une unité de captation de soufre à haute température.

On entend par coupe de type distillat une coupe issue de la distillation du brut ou d'une unité de conversion telle que le craquage catalytique, et dont l'intervalle de distillation se situe entre 150°C et 450°C. Cette coupe peut être de nature chimique quelconque, c'est à dire posséder une répartition entre paraffines, oléfines, naphtènes et aromatiques quelconque.

Dans la suite du texte, nous appellerons cette coupe gazole, mais cette désignation n'a aucun caractère restrictif. Toute coupe hydrocarbonée contenant du soufre et d'intervalle de distillation similaire à celui d'une coupe gazole peut être concernée par le procédé objet de la présente invention.

Le procédé selon l'invention permet donc de produire une coupe hydrocarbonée désulfurée à des teneurs inférieures ou égales à 10 ppm en soufre, préférentiellement inférieure à 5 ppm en soufre, et de manière encore préférée inférieure à 1 ppm en soufre.

Les futures spécifications sur les carburants automobiles prévoient une forte diminution de la teneur en soufre dans les carburants, et notamment sur les gazoles. Cette diminution est destinée à limiter la teneur en oxyde de soufre et azote dans les gaz d'échappement d'automobiles. La législation européenne définit les spécifications de teneur en soufre dans les gazoles qui sont depuis 2000 de 350 ppm en soufre, et passeront en 2005 à 50 ppm de soufre, et en 2009 à 10 ppm de soufre.

L'évolution des spécifications de teneur en soufre dans les carburants nécessite donc, soit l'amélioration des procédés catalytiques d'hydrotraitement existants avec pour conséquence une surconsommation en hydrogène non négligeable et / ou une augmentation de la pression opératoire, soit la mise au point de nouveaux procédés de désulfuration profonde des gazoles, soit une combinaison des deux.

La présente invention peut être vue comme un nouveau procédé de désulfuration profonde des coupes gazoles qui peut s'appliquer dès l'instant que la teneur en soufre de la charge à traiter reste dans certaines limites, ou bien être combiné avec une unité d'hydrodésulfuration traditionnelle, auquel cas il se placera en aval de la dite unité d'hydrodésulfuration.

Parmi les voies nouvelles de désulfuration des gazoles, les procédés de purification par adsorption des composés soufrés sur un adsorbant sélectif présentent une alternative intéressante aux procédés classiques d'hydrodésulfuration.

### EXAMEN DE L'ART ANTERIEUR

Le brevet US 5,454,933 décrit un procédé de désulfuration de gazole qui consiste à enchaîner un hydrotraitement classique pour éliminer les soufrés dits « easy sulfur » (qu'on peut traduire par composés soufrés faciles à éliminer) avec un procédé d'adsorption des composés soufrés difficiles ( dit "hard sulfur" dans le brevet cité) sur du charbon actif de surface spécifique comprise entre 800 et 1200 m2/g et présentant une certaine structure poreuse.

Ces composés soufrés difficiles à éliminer correspondent le plus souvent à des aromatiques de type dibenzothiophènes substitués en beta.

Le procédé d'adsorption décrit dans ce brevet est limité à des températures inférieures ou égales à 175°C, alors que le procédé selon la présente invention fonctionne à des températures supérieures à 200°C. D'autre part, la régénération du charbon actif est effectuée dans le brevet cité au moyen d'un solvant, alors que dans le procédé selon la présente invention, la régénération du solide adsorbant se fait par une combustion contrôlée.

La demande de brevet US 2004140244A1 décrit une désulfuration profonde de gazole en utilisant un solide adsorbant à base d'oxyde de zinc faisant appel à un promoteur à l'état réduit, alors que le procédé selon la présente invention utilise un promoteur sous forme oxyde, ce qui permet d'effectuer la régénération du solide adsorbant sans avoir à le réduire.

Le document US 2003/0111389 décrit un procédé de désulfuration d'une coupe hydrocarbonée de type distillat moyen nécessitant une première étape de vaporisation de la charge au moyen d'un diluant contenant de l'hydrogène. Ce document ne divulgue aucune information sur la surface spécifique du solide adsorbant utilisé.

Le document US 5,935,420 décrit un procédé de désulfuration faisant appel à un catalyseur d'hydrodésulfuration contenant un métal noble choisi parmi le platine (Pt), le Titane (Ti), l'Iridium (Ir) et le rhénium ( Rh). Le solide adsorbant de la présente invention ne contient aucun métal noble.

### DESCRIPTION SOMMAIRE DES FIGURES

La figure 1 représente le schéma du procédé de traitement de désulfuration profonde, objet de la présente invention.

La figure 2 représente le schéma de régénération du solide adsorbant utilisé dans le procédé objet de l'invention.

La figure 3 représente un exemple non limitatif d'intégration du procédé de désulfuration profonde selon l'invention avec un procédé d'hydrodésulfuration classique de gazole.

### DESCRIPTION SOMMAIRE DE L'INVENTION

L'invention peut se définir comme un procédé de désulfuration profonde d'une charge d'hydrocarbures de type gazole, d'intervalle de distillation compris entre 150°C et 450°C.

Le procédé consiste dans un premier temps à mettre en contact la charge à traiter avec un solide adsorbant contenant au moins de l'oxyde de zinc, et un autre oxyde de métal, appelé promoteur, déposé sur un support inorganique dans des conditions de température supérieure à 350°C.

Dans un second temps, lorsque le solide adsorbant est saturé en composés sulfurés, le procédé passe en phase de régénération du solide, celle ci consistant essentiellement en une combustion contrôlée des composés adsorbés à la surface du solide. Le solide régénéré peut alors être remis en contact avec la charge à traiter.

La mise en oeuvre industrielle du procédé nécessitera donc au moins deux unités qu'on appellera par la suite adsorbeurs, travaillant alternativement en phase d'adsorption et en phase de régénération.

La charge à traiter est une coupe hydrocarbonée d'intervalle de distillation compris entre 150°C et 450°C et dont la teneur en soufre doit être inférieure à 500 ppmS, préférentiellement inférieure à 200 ppmS, et de manière encore préférée inférieure à 50 ppmS, afin de maintenir une durée de cycle la plus importante possible.

Le contact entre la charge à traiter et le solide adsorbant doit se faire en présence d'hydrogène. La quantité d'hydrogène à apporter est fixée par le ratio du débit volumique d'hydrogène pris aux conditions d'entrée, sur le débit volumique liquide de la charge hydrocarbure à traiter. Ce ratio doit être compris entre 50 et 300.

Le contact entre le solide adsorbant et la charge à traiter dans les conditions requises entraîne le passage d'une partie dudit solide de la phase oxyde à la phase sulfure.

Une fois que le solide adsorbant est saturé en composés sulfurés ou que la teneur en soufre de l'effluent dépasse les spécifications, ce qui signifie précisément que le solide adsorbant est saturé en composés sulfurés, le solide adsorbant du contacteur considéré est strippé à l'azote pour éliminer les gaz et les hydrocarbures en partie convertis se trouvant dans le volume poreux du dit contacteur, avant d'entrer dans la phase de régénération proprement dite.

Le procédé nécessite donc au moins deux adsorbeurs, travaillant alternativement en adsorption /réaction et en régénération, selon la technique bien connue de l'homme du métier dite des réacteurs en "swing".

La phase de stripage est accompagnée d'une montée en température qui permet à la fois d'améliorer le strippage lui même, et d'atteindre la température nécessaire pour ramener le solide d'adsorption de la phase sulfure à la phase oxyde par une combustion contrôlée.

Une fois que cette température est atteinte, on envoie de l'air dilué dans l'adsorbeur afin d'effectuer la combustion contrôlée des composés adsorbés sur le solide adsorbant et ramener ainsi le solide adsorbant en phase oxyde.

Une fois la régénération terminée, on strippe à nouveau le solide adsorbant pour éliminer les éventuels composés imbrûlés restant à l'issue de la phase de brûlage, et redescendre la température au niveau requis par la phase d'adsorption.

La teneur en soufre du gazole obtenu sera généralement inférieure à 10 ppmS, préférentiellement inférieure à 5 ppmS, et de manière encore préférée inférieure à 1 ppmS, avec un rendement poids rapporté à la charge entrante généralement supérieur à 95% et préférentiellement supérieur à 97%.

### DESCRIPTION DETAILLEE DE L'INVENTION

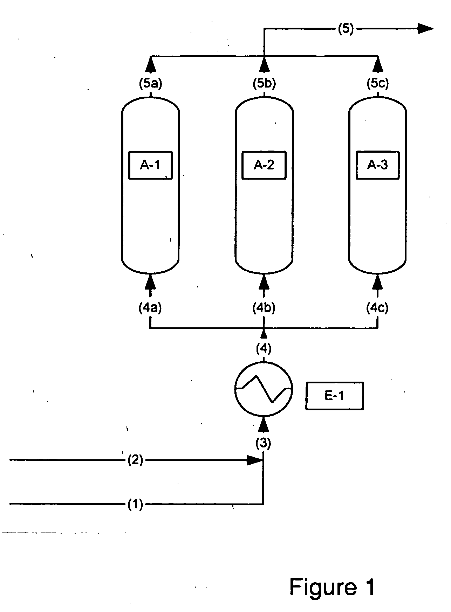

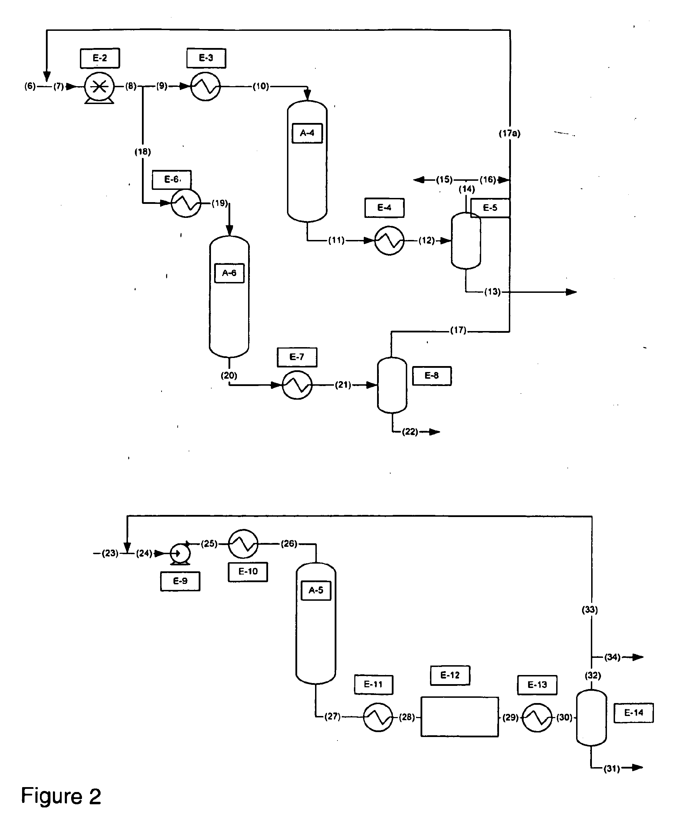

L' invention sera mieux comprise en suivant les schémas de procédé représentés sur les figures 1 et 2.

On présente un exemple de schéma contenant 6 adsorbeurs numérotés de A-1 à A-6. Pour permettre un fonctionnement continu en cycle, les adsorbeurs A-1, A-2 et A-3 sont en phase d'adsorption pendant que les adsorbeurs A-4, A-5 et A-6 sont en phase de régénération. Une fois le temps de cycle atteint, chaque adsorbeur prend la place de celui dont le numéro lui est immédiatement supérieur, sauf l'adsorbeur A-6 qui prend la place de l'adsorbeur A-1.

Le temps de cycle est défini comme étant le temps de perçage divisé par le nombre de colonnes travaillant en adsorption. Le temps de perçage est défini comme étant le temps pendant lequel on produit du gazole aux spécification requises pour un volume de solide adsorbant égal à la somme des volumes des adsorbeurs travaillant en phase d'adsorption.

La figure 1 présente la partie adsorption du procédé de désulfuration profonde. La charge à traiter (1) est mélangée avec de l'hydrogène (2) pouvant provenir d'un hydrotraitement ou d' une unité de production d'hydrogène pour former le flux (3).

Le mélange gaz / liquide (3) est réchauffé à la température de travail voulue dans un échangeur de chaleur E-1.

La température de travail est choisie en fonction de la nature des composés soufrés à traiter et sera supérieure à 350°C.

Cette température doit être cependant inférieure à la température de dégradation de la charge utilisée, qui est typiquement de 450°C pour un gazole.

La pression de travail sera choisie dans un intervalle compris entre 5 et 15 bars. La quantité de solide à mettre en oeuvre dépend de la VVH (vitesse volumique horaire) que l'on définit comme le rapport entre le débit volumique liquide de la charge rapportée au volume de solide adsorbant mis en oeuvre.

La VVH sera comprise entre 0,5 h-1 et 5 h-1.

Le flux (4) effluent de l'échangeur E1, peut être par exemple divisé en trois flux (4a), (4b) et (4c) qui vont chacun alimenter un adsorbeur A-1, A-2 et A-3.

Les effluents (5a), (5b) et (5c) issus des adsorbeurs A-1, A-2 et A-3 sont mélangés entre eux, et le flux (5) résultant est introduit dans un ballon de flash travaillant par abaissement de température pour séparer l'hydrogène et récupérer le gazole désulfuré aux spécifications requises.

La figure 2 présente les étapes de régénération du solide utilisé pour le procédé de désulfuration profonde selon l'invention. L'adsorbeur A-4 subit un stripage /réchauffage permettant d'évacuer la charge de gazole présente dans la porosité du solide. Pour ce faire, un gaz inerte tel que de l'azote d'appoint (6) est rajouté à l'azote (17a) qui est recyclé à l'entrée du procédé.

Le flux d'azote (7) ainsi formé est comprimé à l'aide du compresseur E-2.

Le flux (8) obtenu est séparé en deux flux. Le flux (9) est réchauffé dans l'échangeur E-3, et le flux d'azote (10) obtenu est utilisé pour effectuer le stripage et le réchauffage de l'adsorbeur A-4.

L' effluent (11) obtenu en sortie de l'adsorbeur A-4, est refroidi dans l'échangeur E-4, et le flux refroidi (12) est séparé dans le séparateur E-5.

En fond de séparateur E-5, on récupère un flux (13) de gazole, et en tête du séparateur E-5, on récupère un flux (14) dans un premier temps constitué d'un mélange (15) d'azote et d'hydrogène, puis dans un second temps constitué d'azote uniquement (16).

Les différents composés restant adsorbés sur le solide adsorbant contenu dans l'adsorbeur A-5 sont brûlés par combustion avec de l'air le plus souvent dilué. Pour réaliser cette combustion, un appoint d'air dilué (23) est mélangé avec l'air recyclé (33).

Le flux (24) obtenu est comprimé dans le compresseur E-9, et le flux (25) obtenu est réchauffé dans l'équipement E-10.

Le flux (26) d'air dilué et réchauffé est utilisé pour régénérer l'adsorbeur A-5 par combustion contrôlée.

Les effluents de combustion (27) obtenus contenant essentiellement des SOx et du CO2 sont refroidis dans l'échangeur E-11, et le flux (28) est lavé dans une unité de traitement des fumées E-12.

Les gaz ainsi traités (29) sont refroidis dans l'échangeur E-14, et le flux (30) est séparé dans le ballon séparateur E-14.

On obtient de l'eau (31) utilisée dans l'unité de traitement E-14 ainsi que de l'air contaminé par des fumées résiduelles (32). On débarrasse l'air (32) des fumées résiduelles (34) afin de pouvoir recycler l'air dilué propre (33) à l'entrée du compresseur E-9.

L'adsorbeur A-6 est refroidi sous azote. Le flux (18) d'azote issu du flux (8) est refroidi dans l'échangeur E-6.

Le flux (19) est utilisé pour refroidir l'adsorbeur A-6. Les effluents (20) sont refroidis dans l'échangeur E-7. Le flux (21) obtenu est séparé dans le ballon séparateur E-8. En tête du ballon E-8 on récupère de l'azote (17) qui est recyclé à l'entrée du compresseur E-2, et en fond du ballon E-8 on récupère des fumées (22).

La teneur en soufre de la charge à traiter doit être inférieure à 500 ppmS, préférentiellement inférieure à 350 ppmS, et de manière encore préférée inférieure à 50 ppmS.

Par conséquent, une manière préférée d'utiliser le procédé de désulfuration profonde décrit ci-dessus est de le positionner en aval d'un procédé classique d'hydrodésulfuration catalytique (HDS) qui va pouvoir traiter des charges de teneur en soufre éventuellement supérieure à 500 ppm et ramener celle ci dans la fourchette à partir de laquelle le présent procédé pourra être opéré .

On rappelle qu' une unité d'hydrodésulfuration ( noté HDS en abrégé) transforme l'essentiel des composés soufrés contenus dans un distillat en H2S dans des conditions de température voisine de 450°C, et des pressions comprises entre 20 et 60 bars. Toutefois, une partie des composés soufrés est dite "réfractaire" à l'HDS, car leur transformation en H2S nécessite des conditions en pression et température nettement plus élevées.

Ces molécules réfractaires font partie de la famille des dibenzothiophéniques alkylés.

La teneur en composés réfractaires post HDS dépend de plusieurs paramètres dont le niveau de pression et de température de l'unité d'hydrodésulfuration, les quantités de catalyseurs mises en jeu, et la VVH pratiquée.

La teneur en composés réfractaires dans l'effluent d'une unité d'HDS est en général supérieure à 15 ppmS, et généralement inférieure à 500 ppms, voire 350 ppms, voire 50 ppms.

Dans le cas où la teneur en soufre du gazole hydrotraité est inférieure à 500 ppmS, il est possible d'admettre une quantité de soufre supplémentaire, sous forme d'H2S, jusqu'à concurrence de la limite de 500 ppmS.

La teneur en soufre sous forme d'H2S dépend quant à elle des conditions opératoires de l'HDS ainsi que des opérations unitaires (séparation, refroidissement, lavages,...) situées en aval du réacteur d'HDS.

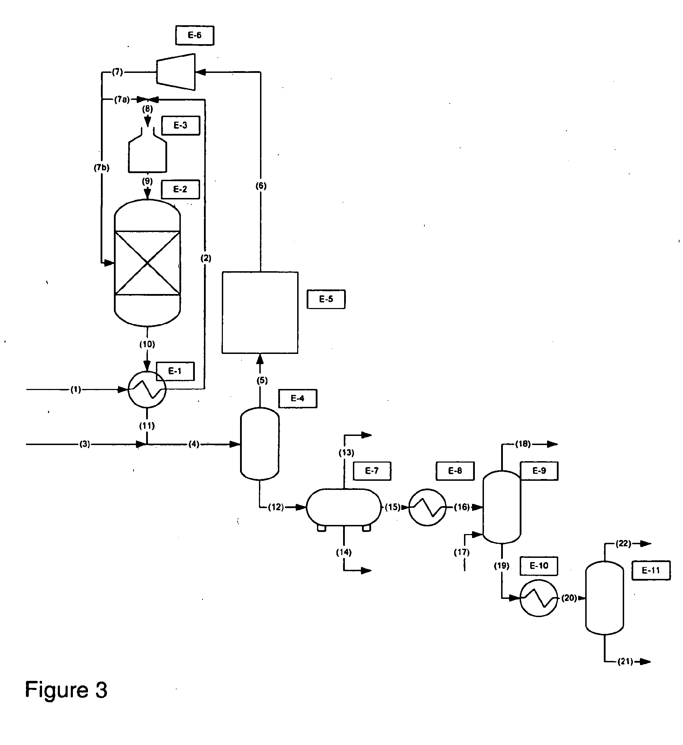

La figure 3 présente un exemple typique de schéma d'une HDS de gazole.

Ce schéma est destiné à illustrer les différents possibilités de positionnement de la présente invention par rapport à un procédé d'HDS existant.

La charge à traiter (1) est pré-chauffée à travers un échangeur charge effluent E-1. La charge préchauffée (2) est mélangée avec de l'hydrogène (7a) pour former un mélange gaz liquide (8) réchauffée dans le four E-3. La charge (9) est envoyée dans le réacteur d'HDS E-2 à la température désirée.

Dans la figure 3, un réacteur HDS étagé est utilisé, dans lequel une partie de l'hydrogène (7b) est rajoutée. Les effluents de sortie (10) sont refroidis à l'aide de l'échangeur charge effluent E-1.

Les effluents partiellement refroidis (11) sont mélangés avec de l'hydrogène d'appoint (3) pour former un mélange (4) qui alimente un séparateur gaz liquide E-4. Les gaz (5) sont envoyés vers un traitement aux amines E-5 qui permet de retirer une partie de l'H2S présent et de le désacidifier. L'hydrogène traité (6) est comprimé dans le compresseur E-6 pour être amené à la pression désirée de travail dans l'HDS (7).

Le liquide (12) recueilli à partir du séparateur E-4 est envoyé dans un séparateur E-7 pour séparer le fuel gaz (13) et l'eau (14).

Le gazole obtenu (15) est refroidi dans l'échangeur E-8 et le flux (16) obtenu est envoyé dans un stripper E-9 dans lequel il est mélangé avec de la vapeur d'eau haute pression (17). Cela permet de récupérer des hydrocarbures légers (18) en tête et un gazole propre sans H2S (19) en fond.

Le flux (19) est refroidi dans l'échangeur E-10, et le flux (20) obtenu est séché dans l'équipement E-11. On obtient alors un gazole partiellement désulfuré (21) en fond de sécheur et de l'eau (22) en tête.

Le procédé de désulfuration profonde, objet de la présente invention, peut être placé sur n'importe lequel des flux (4), (10), (11), (12), (15), (16), (19), (20) et (21) se trouvant en aval du réacteur d'HDS E-2, à condition que la teneur en soufre total du dit flux soit inférieure à 500 ppmS.

D'une manière préférée, le procédé de désulfuration profonde sera placé à un endroit où la teneur en H2S formé sera la plus faible possible, et la température la plus haute possible, et de manière encore préférée supérieure à 200°C.

On peut par exemple placer l'unité de désulfuration profonde selon l'invention au niveau du flux (19) indiqué sur la figure 3.

Le solide adsorbant utilisé dans l'unité de désulfuration profonde comprend généralement au moins de l'oxyde de zinc en présence d'un promoteur de désulfuration sous forme oxyde, l'oxyde de zinc et le promoteur étant déposés sur un support poreux ou mélangés avec le dit support poreux.

Les particules de solide adsorbant seront généralement de forme sphérique, avec un diamètre supérieur à 500 microns. Elles pourront dans certains cas avoir la forme d'extrudés, la longueur de l'extrudé étant dans ce cas supérieure à 500 microns. les particules pourront avoir des formes plus élaborées comme celle dite en "trilobe" qui présente trois excroissances en forme de pétales. De manière générale pour ces diverses formes non sphériques, on définit un diamètre équivalent au sens de SAUTER comme étant le diamètre de la sphère ayant le même rapport surface sur volume que celui de la particule considérée.

Rappelons que la mise en oeuvre du procédé selon l'invention peut se faire en lit fixe ou en lit mobile. Le diamètre de Sauter des particules sera compris entre 1 et 5 millimètres.

La quantité de zinc élémentaire doit être supérieure à 10% poids du solide total.

Le promoteur est un métal sous forme oxyde choisi parmi les éléments de la liste suivante: fer, cuivre.

On choisira le promoteur parmi le fer ou le cuivre.

La quantité de promoteur varie entre 10% et 20 % poids du solide total.

Le support inorganique poreux sert à apporter de la surface spécifique dont la valeur doit être supérieure à 100 m2/g.

La porosité du support doit être essentiellement de type mésoporeux (diamètres des pores entre 20 et 500 angstroms) et macroporeux (supérieur à 500 angstroms) avec des valeurs du volume poreux comprises entre 0,1 ml/g et 0,6 ml/g pour chaque type de porosité, et de préférence comprise entre 0,2 et 0,4 ml/g pour chaque type de porosité. Il peut être choisi parmi la liste suivante: alumine, silice ou un mélange des deux.

Le Zinc peut également être incorporé au support en formant par exemple, de l'aluminate de zinc, du silicate de zinc ou de l'aluminosilicate de Zinc. De la même manière, le promoteur peut être incorporé au support pour former un aluminate, un silicate ou un aluminosilicate du métal correspondant au promoteur en question.

La température de travail pourra être comprise entre 350°C et la température de dégradation de la charge à traiter. Typiquement, cette température de dégradation est proche de 450°C pour un gazole.

La pression de travail sera comprise entre 5 et 15 bars. On travaillera de préférence sur un mélange charge/hydrogène majoritairement vaporisé, et de préférence entièrement vaporisé.

### EXEMPLE SELON L'INVENTION

On utilise 20 g d'un solide adsorbant à base d'oxydes de zinc (25% poids), de cuivre (15% poids) et d'alumine en complément ( 60 % poids) que l'on charge dans un petit réacteur de laboratoire appelé "catatest" par l'homme du métier.

Les particules de solide adsorbant sont sphériques et ont un diamètre de 1,5 mm.

On considère une charge liquide comprenant des molécules modèle de type décane qui représente la matrice gazole, et du dibenzothiophène à concentration de 200 ppmS représentatif des composés soufrés réfractaires restant après une hydrodésulfuration (HDS).

Les conditions opératoires sont les suivantes:

| | |
|---|---|
| Débit charge liquide: | 0,2 l/H |
| Débit hydrogène: | 40 Nl/h |
| Température: | 350 °C |
| Pression totale: | 10 bars |
| VVH: | 4h-1 |

Le test effectué permet de produire 60 volumes de gazole désulfuré à 8 ppm de S pour 1 volume de solide mis en jeu dans le réacteur. A l'issu du test, le solide a été sulfuré en partie, et la quantité de soufre capté est de l'ordre de 10 mg S /gramme de solide. Le rendement en gazole est supérieur à 99 %.

Après la phase de captation, on introduit le solide adsorbant dans un lit traversé que l'on chauffe à 450°C sous azote. On balaye le solide par un mélange de gaz contenant 2% volume d'oxygène dans de l'azote pendant 3 heures, ce qui permet de repasser le solide à la phase oxyde.

On balaye le solide avec de l'azote pour le refroidir et revenir à la température ambiante.

Le solide est alors de nouveau utilisable pour l'adsorption.

## Revendications

1. Procédé de désulfuration profonde d'une coupe hydrocarbure d'intervalle de distillation compris entre 150°C et 450°C et de composition chimique quelconque contenant moins de 500 ppm de soufre, en vue de produire une coupe désulfurée contenant moins de 10 ppm de soufre, placé en aval d'une unité d'hydrodésulfuration catalytique, dans lequel on utilise un solide adsorbant, contenant au moins un oxyde de zinc et un promoteur sous la forme d'un oxyde de fer ou de cuivre, l'oxyde de zinc représentant plus de 10% poids du solide adsorbant et le promoteur représentant de 10% à 20% poids du solide adsorbant, l'oxyde de zinc et le promoteur étant déposés sur un support poreux à base de silice ou d'alumine ou d'un mélange de silice et d'alumine, ledit support poreux présentant une surface spécifique supérieure à 100 m2/gramme, une mésoporosité avec un volume poreux compris entre 0,1 et 0,6 ml/g, et une macroporosité avec un volume poreux compris entre 0,1 et 0,6 ml/g, on met en contact le dit solide adsorbant avec la charge à traiter à une température supérieure à 350°C, à une pression comprise entre 5 et 15 bars, avec une VVH comprise entre 0,5 h-1 et 5 h-1, et en présence d'hydrogène avec un rapport volumique de l'hydrogène introduit pris aux conditions d'entrée de l"adsorbeur sur la charge à traiter compris entre 50 et 300, jusqu'à saturation du dit solide en composés soufrés, puis on régénère le dit solide adsorbant par une combustion contrôlée à l'air dilué de manière à retrouver la forme oxyde du dit solide adsorbant, on balaye à l'azote le solide adsorbant qui est alors prêt à être réintroduit en phase d'adsorption, la mise en oeuvre du procédé se faisant dans au moins deux réacteurs en lit fixe travaillant alternativement en phase d'adsorption et en phase de régénération, le diamètre de Sauter des particules d'adsorbant constituant le lit étant compris entre 1 et 5 mm.

2. Procédé de désulfuration profonde selon la revendications 1 dans lequel le volume poreux de la mésoporosité du support est préférentiellement compris entre 0,2 et 0,4 ml/g, et le volume poreux de la macroporosité du support est préférentiellement compris entre 0,2 et 0.4 ml/g.

3. Procédé de désulfuration profonde selon l'une quelconque des revendications 1 à 2, dans lequel l'oxyde de zinc est incorporé au support sous la forme d'aluminate de zinc ou de silicate de zinc ou de silicoaluminate de zinc.

## Claims

1. Process for deep desulfurization of a hydrocarbon fraction with a distillation interval of between 150°C and 450°C and of any chemical composition, containing less than 500 ppm of sulfur, for producing a desulfurized fraction that contains less than 10 µm of sulfur, positioned downstream of a catalytic hydrodesulfurization unit, whereby said process uses an adsorbent solid that contains at least one zinc oxide and a promoter in the form of iron oxide or copper oxide, whereby zinc oxide is in a quantity of more than 10 % in weigh of the adsorbent solid, and the promoter is in a quantity ranging between 10% to 20% in weigh of the adsorbent solid, zinc oxide and the promoter being deposited on a porous substrate based on silica or alumina or a mixture of silica and alumina, said porous substrate exhibiting a specific surface area greater than 100 m2/gramme, and exhibiting both a mesoporosity with a pore volume of between 0.1 and 0.6 ml/g, and a macroporosity with a pore volume of between 0.1 and 0.6 ml/g, adsorbent solid is brought into contact with the feedstock that is to be treated at a temperature greater than 350°C, at a pressure ranging between 5 and 10 bar, with a VVH ranging between 0.5 and 5 h-1, in presence of hydrogen wherein the volumetric ratio of the introduced hydrogen, taken under the input conditions of the adsorber, to the feedstock to be treated is between 50 and 300 until the saturation of said solid in sulfur-containing compounds is completed, then said adsorbent solid is regenerated by a controlled combustion with dilute air so as to regain the oxide form of said adsorbent solid, then the adsorbent solid is swept with nitrogen and is then reintroduced in adsorption phase, the achievement of the process needing at least two adsorbers in fixed bed, working alternately in adsorption and in regeneration steps, and the Sauter diameter of the adsorbent solid particles ranging between 1 and 5 millimeters.

2. Process for deep desulfurization according to claims 1, wherein the mesoporosity pore volume of the porous substrate is preferably between 0.2 and 0.4 ml/g, and the macroporosity pore volume of the porous substrate is preferably between 0.2 and 0.4 ml/g.

3. Process for deep desulfurization according to any of claims 1 to 2, wherein the zinc oxide is incorporated in the substrate in the form of zinc aluminate or zinc silicate or zinc silicoaluminate.

## Patentansprüche

1. Verfahren zum gründlichen Entschwefeln einer Kohlenwasserstoffrcaktion mit Destillationsverlauf zwischen 150 °C und 450 C und mit beliebiger chemischer Zusammensetzung, die mindestens 500 ppm Schwefel enthält, um eine entschwefelte Fraktion zu erzeugen, die weniger als 10 ppm Schwefel enthält, angeordnet stromaufwärts einer katalytischen Hydrodesulfierungseinheit, in der man einen adsorbierenden Feststoff verwendet, der mindestens ein Zinkoxid und einen Aktivator in der Form eines Eisen- oder Kupferoxids enthält, wobei das Zinkoxid mehr als 10 Gew.-% des adsorbierenden Feststoffs darstellt und der Aktivator 10 bis 20 Gew.-% des adsorbierenden Feststoffs darstellt, wobei das Zinkoxid und der Aktivator auf einem porigen Träger auf Silicium- oder Aluminiumoxidbasis oder einem Gemisch aus Silicium- und Aluminiumoxid abgelegt sind, wobei der porige Träger eine spezifische Oberfläche größer als 100 m²/Gramm aufweist, eine Mesoporosität mit einem Porenvolumen zwischen 0,1 und 0,6 ml/g, und eine Makroporosität mit einem Porenvolumen zwischen 0,1 und 0,6 ml/g, wobei man den adsorbierenden Feststoff mit der zu behandelnden Charge bei einer Temperatur größer als 350 °C bei einem Druck zwischen 1 und 15 bar, mit einer VVH zwischen 0,5 h-1 und 5 h-1 und in Gegenwart von Wasserstoff mit einem Volumenverhältnis des eingeführten Wasserstoffs (bei den Eingangsbedingungen des Adsorbers genommen) auf der zu behandelnden Charge zwischen 50 und 300 in Kontakt bringt, und bis zur Sättigung des Feststoffs mit schwefelhaltigen Zusammensetzungen, man dann den adsorbierenden Feststoff mit einer kontrollierten Verbrennung mit verdünnter Luft derart regeneriert, dass man die Oxidform des adsorbierenden Feststoffs wiederfindet, man den adsorbierenden Feststoff mit Stickstoff spült, der dann wieder in Adsorptionsphase eingeführt werden kann, wobei die Umsetzung des Verfahrens in mindestens zwei Reaktoren im Festbett erfolgt, die abwechselnd in Adsorptionsphase und in Regenerierungsphase arbeiten, wobei der Sauterdurchmesser der Adsorptionsmittelpartikel, die das Bett bilden, zwischen 1 und 5 mm liegt.

2. Verfahren zum gründlichen Entschwefeln nach Anspruch 1, bei dem das Porenvolumen der Mesoporosität des Trägers vorzugsweise zwischen 0,2 und 0,4 ml/g und das Porenvolumen der Makroporosität des Trägers vorzugsweise zwischen 0,2 und 0,4 ml/g liegt.

3. Verfahren zum gründlichen Entschwefeln nach einem der Ansprüche 1 bis 2, bei dem das Zinkoxid in den Träger in Form von Zinkaluminat oder Zinksilicat oder Zinkaluminiumsilikat eingemischt ist.
